# EUROPEAN PATENT SPECIFICATION

(11) **EP 1 850 662 B1**
(45) Date of publication and mention of the grant of the patent: **08.02.2012**
(21) Application number: 06723080.5
(22) Date of filing: 22.02.2006
(51) Int. Cl.: A01N 25/00, A01N 65/00

(54) **METHOD OF IMPROVING NEMATODE TOLERANT OR RESISTANT PLANT GROWTH**
VERFAHREN ZUR VERBESSERUNG DES NEMATODEN TOLERANTEN BZW. -RESISTENTEN PFLANZENWACHSTUMS
PROCEDE VISANT A AMELIORER LA CROISSANCE DE PLANTES PRESENTANT UNE TOLERANCE OU UNE RESISTANCE AUX NEMATODES

(30) Priority: 24.02.2005 US 656042 P
(43) Date of publication of application: 07.11.2007
(60) Divisional application: 10185220.0
(73) Proprietor: Syngenta Participations AG, 4058 Basel (CH)
(72) Inventor: LONG, David, Greensboro, NC 27409 (US)
(74) Representative: Arunasalam, Velautha-Cumaran
(86) International application number: PCT/EP2006/001615
(87) International publication number: WO 2006/089733

(56) References cited:
- WO-A-2005/120232
- DATABASE CA [Online] CHEMICAL ABSTRACTS SERVICE, COLUMBUS, OHIO, US; WHITEHEAD, A. G. ET AL: "Control of potato cyst-nematode, Globodera rostochiensis, in a three-course rotation" XP002421950 retrieved from STN Database accession no. 1981:97927 & JOURNAL OF AGRICULTURAL SCIENCE , 95(2), 293-304 CODEN: JASIAB; ISSN: 0021-8596, 1980,

## Description

The present invention relates to a method for improving the growth characteristics of a nematode tolerant or resistant plant by treating a plant propagation material thereof with a pesticide having nematicide properties, and the material so treated.

Nematodes damage crops by direct feeding damage, by transmitting viruses and by facilitating bacterial and fungal infections. The damage caused by nematodes to crops is often unspecific and easily confused with drought, malnutrition or disease. Typical symptoms are wilting, yellowing of the foliage and uneven or stunted growth.

Methods to control nematodes and thereby protect the plant include (1) use of nematicides (such as aldicarb) and fumigants (e.g., methyl bromide), (2) use of soil steaming, (3) use of crop rotation practices, which is effective against nematodes that are specific to a particular crop; however, nematodes that have different hosts cannot be controlled by this method, and (4) use of nematode resistant or tolerant crops, which have been developed by conventional breeding or recombinant DNA technology (genetically modified plants).

It has now been found that treatment of a propagation material that possess nematode resistance or tolerance, before it is sown or planted, with a nematicide provides unexpectedly better plant growth characteristics compared with a nematicide applied, for example, as an in-furrow.

Accordingly, in a first aspect the present invention provides a method of improving the growing characteristics, such as yield and/or vigour, of a nematode tolerant or resistant plant, which method comprises treating a plant propagation material of the plant with a pesticide having nematicide properties before it is sown or planted.

In a second aspect, the present invention provides a nematode tolerant or resistant plant propogation material treated by a nematicide before it is sown or planted.

The present invention is especially suitable for agromically important plants, which refers to a plant that is harvested or cultivated on a commercial scale.

Examples of such agronomic plants (or crops) include, without limitation, cotton, corn, cereals (including wheat, barley, rye, and rice), vegetables (including fruiting vegetable, such as tomatoes, bulb vegetables, leafy vegetables, brassicas and vegetable roots), clovers, legumes (including beans, soybeans, peas and alfalfa), sugar cane, sugar beets, tobacco, rapeseed (canola), sunflower, safflower, and sorghum.

The term "plant propagation material" is understood to denote all the generative parts of the plant, such as seeds, which can be used for the multiplication of the latter and vegetative plant material such as cuttings and tubers (for example, potatoes). There may be mentioned, e.g., the seeds (in the strict sense), roots, fruits, tubers, bulbs, rhizomes, parts of plants. Germinated plants and young plants, which are to be transplanted after germination or after emergence from the soil, may also be mentioned. These young plants may be protected before transplantation by a total or partial treatment by immersion.

A nematode resistant or tolerant plant is a plant that is able to demonstrate lower levels of nematode feeding, reproduction and/or increased yield gains when compared to other known susceptible varieties. Therefore, a nematode resistant or tolerant plant is a plant that is able to sustain the effects of nematode attack without dying or suffering serious injury or crop loss. Generally, such plants possess certain qualities (for example, genes) that provide this sustenance.

Suitable plant propagation material for the present invention are those that have been manupilated to have nematode resistance or tolerance via incorporation of one or more genes or alleles into the genome of the plant, wherein the incorporated gene or allele is known to possess nematode resistance or tolerance, or wherein the incorporated gene or allele is not known to possess nematode resistance or tolerance, but the plant, nevertheless, demonstrates lower levels of nematode feeding, reproduction and/or increased yield gains when compared to other known susceptible varieties. The demonstrated response from the plant to the nematode may be against a specific genus, species or race of a nematode and not another or against a number of races, species or genus of nematodes at the same or differing levels of resistant.

Examples of cotton seeds include Stoneville Pedigreed variety ST5599BR, which is derived from the transformation of LA 877 (cottonseed variety from Louisiana) that has a single recessive gene for resistance to Root-Knot nematode. Two genes are needed for complete resistance to root-knot nematode in cotton, but if one gene is present, (i.e. ST5599BR), then the plant has a lower resistance / tolerance against root-knot nematode. The cottonseed variety NemX is another example of a gene related partial resistance to root-knot nematode (*Meloidogyne incognita*) type.

Examples of tomato seeds are Mi gene resistant seeds. The Mi gene found in specific tomato varieties confers resistance to Root-knot nematode that is derived from Mi locus in the tomato plant. Marina, Lycopersicon lycopersicum, is an example of a tomato seed variety that has the Mi gene that confers resistance to root-knot.

There are examples of soybean seeds that have incorporated resistance to soybean cyst nematode (SCN). There are several known loci encoding resistance to SCN and specific soybean genotypes have distinct responses to particular SCN races. The incorporation of a loci of resistance alleles or specific genes resistant to SCN protects plants from some soybean cyst nematodes. Often the allele will provide protection to the soybean germplasm against a specific race of nematodes and not others (from another race). Examples of varieties of soybeans that have race specific resistance to soybean cyst nematodes are Northrup King S26-V6, S29-J6 (efficacy against race 3 and moderate efficacy against race 14) Garst 1212RR/N, 1812RR/N (efficacy against race 3 and efficacy against 14) Pioneer 91 M90 and 92M92, (efficacy against race 1 and 3) and Pioneer 93B67, 93M50, 9492, 95B53, 97B52, 92M70 (efficacy against race 5 and 14) and Fowler soybean variety (efficacy against races 2,3 & 5). There are numerous races of soybean cyst nematodes identified, but typically only a few of these are widely used in the development of SCN resistance (races 1, 2, 3, 4, 5 and 14).

A race is defined as a genetically and often geographical distinct mating group within a species and/or a group of pathogens (e.g. nematodes) that infect a given set of plant varieties. There are many nematode species that have race designation due to host specification (*M. incognita* race 3 is pathogenic on cotton but not peanuts and *M. arenaria* race 1 is pathogenic on peanuts but not cotton) or varieties within a host (Heterodera glycines race 1 will attack the soybean variety Pioneer 92M70, but not the soybean variety Pioneer 92M92.

In an embodiment, the nematicide seed treatment is on a cotton seed variety, such as Stoneville Pedigreed cottonseed variety ST5599BR and Fowler soybean [*Glycine max* (L.) Merr.] (Reg. no. CV- 421, PI 613195) variety that was developed and is sold by the USDA-ARS and the University of Tennessee Agricultural Experiment Station.

In another aspect, the present invention also relates to a method of protecting a nematode resistant or tolerant plant or propagation material thereof against nematode attack.

The present invention is believed to prevent damage to the plant by nematodes, and thus improve the growth characteristics, through improved control of such nematodes.

The improvement in the growing (or growth) characteristics of a plant can manifest in a number of different ways, but ultimately it results in a better product of the plant. It can, for example, manifest in improving the yield and/or vigour of the plant or quality of the harvested product from the plant.

As used herein the phrase "improving the yield" of a plant relates to an increase in the yield of a product of the plant by a measurable amount over the yield of the same product of the plant produced under the same conditions, but without the application of the subject method. It is preferred that the yield be increased by at least about 0.5%, more preferred that the increase be at least about 1 %, even more preferred is about 2%, and yet more preferred is about 4%, or more. Yield can be expressed in terms of an amount by weight or volume of a product of the plant on some basis. The basis can be expressed in terms of time, growing area, weight of plants produced, amount of a raw material used, or the like.

As used herein the phrase "improving the vigour" of a plant relates to an increase or improvement of the vigour rating, or the stand (the number of plants per unit of area), or the plant height, or the plant canopy, or the visual appearance (such as greener leaf colour), or the root rating, or emergence, or protein content, or increased tillering, or bigger leaf blade, or less dead basal leaves, or stronger tillers, or less fertilizer needed, or less seeds needed, or more productive tillers, or earlier flowering, or early grain maturity, or less plant verse (lodging), or increased shoot growth, or earlier germination, or any combination of these factors, or any other advantages familiar to a person skilled in the art, by a measurable or noticeable amount over the same factor of the plant produced under the same conditions, but without the application of the subject method.

When it is said that the present method is capable of "improving the yield and/or vigour" of a plant, the present method results in an increase in either the yield, as described above, or the vigor of the plant, as described above, or both the yield and the vigor of the plant.

A particular advantage of the present invention is that, a nematicide treated plant propagation material, such as a seed, that have built-in nematode resistance/tolerance, as well demonstrating a surprising improvement in the growing characteristics of a plant, still provide protection against nematodes at high temperatures.

Examples of nematode pests include the species Meloidogyne spp. (for example, Meloidogyne incoginita and Meloidogyne javanica), Heterodera spp. (for example, Heterodera glycines, Heterodera schachtii, Heterodora avenae and Heterodora trifolii), Globodera spp. (for example, Globodera rostochiensis), Radopholus spp. (for example, Radopholus similes), Rotylenchulus spp., Pratylenchus spp. (for example, Pratylenchus neglectans and Pratylenchus penetrans), Aphelenchoides spp., Helicotylenchus spp., Hoplolaimus spp., Paratrichodorus spp., Longidorus spp., Nacobbus spp., Subanguina spp. Belonlaimus spp., Criconemella spp., Criconemoides spp. Ditylenchus spp., Dolichodorus spp., Hemicriconemoides spp., Hemicycliophora spp., Hirschmaniella spp., Hypsoperine spp., Macroposthonia spp., Melinius spp., Punctodera spp., Quinisulcius spp., Scutellonema spp., Xiphinema spp., and Tylenchorhynchus spp..

A single pesticide may have activity in more than one area of pest control, for example, a pesticide may have fungicide, insecticide and nematicide activity. Specifically, aldicarb is known for insecticide, acaricide and nematicide activity, while metam is known for insecticide, herbicide, fungicide and nematicide activity, and thiabendazole and captan can provide nematicide and fungicide activity. Accordingly, nematicide, preferably a plant propagation material treatment nematicide, within the present invention is a pesticide that demonstrates an acceptable control of a nematode, such as in the range of 10-50, preferable 20-45, more preferably 30 to 40, %, improvement in nematode control compared to an untreated (no nematicide) check.

Examples of nematicides suitable for use in the present invention to treat a plant propagation material are Abamectin, Carbamate nematicides (e.g., aldicarb, carbofuran, carbosulfan, oxamyl, aldoxycarb, ethoprop benomyl, alanycarb), organophosphorus nematicides (e.g., henamiphos, fenamiphos, fensulfothion, terbufos, fosthiazate, dimethoate, phosphocarb, dichlofenthion, isamidofos, fosthietan, isazofos ethoprophos, cadusafos, terbufos, chlorpyrifos, dichlofenthion, heterophos, isamidofos, mecarphon, phorate, thionazin, triazophos, diamidafos, fosthietan, phosphamidon. Abamectin, aldicarb or oxamyl is a preferred nematicide in this invention.

The plant propagation material defined in the invention can be treated, in addition to the nematicide, with one or more other pesticides, such as fungicides and insecticides.

Even distribution of the active ingredients (nematicide(s)), and optionally one or more other pesticides) and adherence thereof to the seeds is desired during treatment of the propagation material, for example, a seed. The treatment could vary from a thin film of the formulation containing the active ingredient(s) on a plant propagation material, such as a seed, where the original size and/or shape are recognizable to a thick film (such as a coating or pelleting with many layers of different materials (such as carriers for example, clays; different formulations, such as of other active ingredients; polymers; and colourants) where the original shape and/or size of the seed is no longer recognisable.

Accordingly, in the second aspect, the nematicide is adhered to the propagation material, such a seed.

Although it is believed that the present method can be applied to a seed in any physiological state, it is preferred that the seed be in a sufficiently durable state that it incurs no damage during the treatment process. Typically, the seed would be a seed that had been harvested from the field; removed from the plant; and separated from any cob, stalk, outer husk, and surrounding pulp or other non-seed plant material. The seed would preferably also be biologically stable to the extent that the treatment would cause no biological damage to the seed. It is believed that the treatment can be applied to the seed at any time between harvest of the seed and sowing of the seed or during the sowing process (seed directed applications).

The seed treatment occurs to an unsown seed, and the term "unsown seed" is meant to include seed at any period between the harvest of the seed and the sowing of the seed in the ground for the purpose of germination and growth of the plant.

Treatment to an unsown seed is not meant to include those practices in which the pesticide is applied to the soil but would include any application pratice that would target the seed during the planting process.

Preferably, the treatment occurs before sowing of the seed so that the sown seed has been pre-treated.

The pesticide (e.g., nematicide, fungicide, insecticide) are in the form of a formulation, which can be applied to the seeds using conventional treating techniques and machines, such as fluidized bed techniques, the roller mill method, rotostatic seed treaters, and drum coaters. Other methods, such as spouted beds may also be useful. The seeds may be presized before coating. After coating, the seeds are typically dried and then transferred to a sizing machine for sizing. Such procedures are known in the art.

Whereas commercial products will preferably be formulated as concentrates (known as a pre-mix composition (or concentrate, formulated compound (or product)), the end user will normally employ dilute formulations, optionally also containing one or more other pesticide pre-mixes (known as a tank mix composition (or ready-to-apply, spray broth, or slurry)) for treatment of the propagation material, but can also be use appropriately formulated pre-mix compositions.

The formulation for the treatment of the pesticide, including the nematicide, can take a variety of forms including, suspensions, emulsions, solutions or dusts, optionally with the use of polymeric carriers or stickers.

The formulation (pre-mix or tank-mix) comprises as well the nematicide and, optionally other pesticides, in a specific particle size, at least one of the auxiliary (also known as adjuvants) customary in formulation technology, such as extenders, *e.g.*, solvents (e.g., water) or solid carriers, or surface-active compounds (surfactants), in the form of a formulation, in the present invention.

Examples of seed treatment pre-mix formulations types are:
WS: wettable powders for seed treatment slurry
LS: solution for seed treatment
ES: emulsions for seed treatment
FS: suspension concentrate for seed treatment
WG: water dispersible granules, and
CS: aqueous capsule suspension.

Examples of formulation types suitable for tank-mix compositions are solutions, dilute emulsions, suspensions, or a mixture thereof, and dusts.

The tank-mix compositions are generally prepared by diluting with a solvent (for example, water) the one or more pre-mix compositions containing different pesticides, and optionally further auxiliaries. Generally, an aqueous tank-mix is preferred.

Normally, a tank-mix formulation for seed treatment application comprises 0.25 to 80%, especially 1 to 75 %, of a pesticide, and 99.75 to 20 %, especially 99 to 25 %, of a solid or liquid auxiliaries (including, for example, a solvent such as water), where the auxiliaries can be a surfactant in an amount of 0 to 40 %, especially 0.5 to 30 %, based on the tank-mix formulation.

Typically, a pre-mix formulation for seed treatment application comprises 0.5 to 99.9 %, especially 1 to 95 %, of a pesticide, and 99.5 to 0.1 %, especially 99 to 5 %, of a solid or liquid adjuvant (including, for example, a solvent such as water), where the auxiliaries can be a surfactant in an amount of 0 to 50 %, especially 0.5 to 40 %, based on the pre-mix formulation. Preferred seed treatment pre-mix formulations are aqueous suspension concentrates.

The Examples, which follow serve to illustrate the suitable formulations.

### Formulation Examples

| Wettable powders | a) | b) | c) |
|---|---|---|---|
| active ingredient | 25 % | 50 % | 75 % |
| sodium lignosulfonate | 5 % | 5 % | - |
| sodium lauryl sulfate | 3 % | - | 5 % |
| sodium diisobutylnaphthalenesulfonate | - | 6 % | 10 % |
| phenol polyethylene glycol ether | - | 2 % | - |
| (7-8 mol of ethylene oxide) | | | |
| highly dispersed silicic acid | 5 % | 10 % | 10 % |
| Kaolin | | 62 % | 27 % |

The active ingredient is thoroughly mixed with the adjuvants and the mixture is thoroughly ground in a suitable mill, affording wettable powders which can be diluted with water to give suspensions of the desired concentration.

| Dusts | a) | b) | c) |
|---|---|---|---|
| active ingredient | 5 % | 6 % | 4 % |
| Talcum | 95 % | - | - |
| Kaolin | - | 94 % | - |
| mineral filler | - | - | 96 % |

Ready-for-use dusts are obtained by mixing the active ingredient with the carrier and grinding the mixture in a suitable mill. Such powders can be used for dry dressings for seed.

| Suspension concentrates | (a) | (b) |
|---|---|---|
| active ingredient | 5% | 30 % |
| propylene glycol | 10% | 10 % |
| Tristyrylphenol ethoxylates | 5 % | 6 % |
| sodium lignosulfonate | - | 10 % |
| carboxymethylcellulose | - | 1 % |
| silicone oil (in the form of a 75 % emulsion in water) | 1 % | 1 % |
| Colour pigment | 5 % | 5 % |
| water | 74 % | 37 % |

The finely ground active ingredient is intimately mixed with the adjuvants, giving a suspension concentrate from which suspensions of any desired dilution can be obtained by dilution with water. Alternatively, a suspension of the active ingredients and auxiliaries (including water) is wet milled with a bead-mill to achieve a stable formulation and with the appropriate treatment characteristics.

In an embodiment, the Abamectin nematicide is in the form of a suspension concentrate, such as an aqueous suspension.

The nematicide according to the present invention is preferably treated on to a seed at 0.01 to 2, preferably 0.05 to 1, especially 0.1 to 0.8, mg, of active ingredient per seed. The specific rates would differ depending on the seed and the nematicide, but as an example, abamectin is treated onto a cotton seed at 0.1 to 0.2 mg ai /seed, a tomato seed at 0.3 to 0.6 mg ai/seed and a soybean seed at 0.1 to 0.2 mg ai/seed.

The treated plant propagation material of the present invention can be treated in the same manner as conventional plant propagation material.

The treated seeds can be stored, handled, sowed and tilled in the same manner as any other pesticide treated seed.

The action of a seed treatment nematicide, such as abamectin, can be significantly improved and adapted to the given circumstances by the use of other seed treatment nematicide compounds used in agriculture (examples mentioned above).

Further, the growing characteristics of a plant can be further improved by incorporating in the treatment on the propagation material one or more other pesticides, which can provide control of other pests, such as diseases and insects.

Suitable examples of other pesticides to be use in combination with the nematicide, in a pre-mix, tank-mix or on the propagation material (e.g. seed), include triazole derivatives, strobilurins, carbamate (including thiocarbamate), benzimidazoles (thiabendazole), N-trihalomethylthio compounds (captan), substituted benzenes, carboxamides, phenylamides and phenylpyrroles, and mixtures thereof; and neonicotinoids, carbamates and pyrethroids.

Specifc examples are acephate (2), acetamiprid (4), alpha-cypermethrin (202), azinphos-methyl (45), bifenthrin (76), carbaryl (115), carboxin (120), carbofuran (118), carbosulfan (119), chlorpyrifos (145), clothianidin (165), cyromazine (209), deltamethrin (223), dimethoate (262), emamectin benzoate (291), endosulfan (294), fipronil (354), furathiocarb (412), gamma-HCH (430), imidacloprid (458), Isofenphos, methiocarb (530), omethoate (594), tefluthrin (769), thiamethoxam (792), thiacloprid (791), thiodicarb (799), azoxystrobin (47), pyraclostrobin (690), benomyl (62), benalaxyl (56), bitertanol (84), captan (114), carbendazim (116), carboxin (120), chlorothalonil (142), copper salts (such as copper sulfate (172), cuprous oxide (181), Bordeaux mixture (87), copper hydroxide (169), copper sulfate (tribasic) (173), copper oxychloride (171) and copper octanoate (170)), cymoxanil (200), cyproconazole (207), cyprodinil (208), difenoconazole (247), dimoxystrobin, diniconazole (267), ethirimol, famoxadone (322), fenoxanil (338), fluoxastrobin, fenamidone (325), fenhexamid (334), fenpiclonil (341), fluazinam (363), fluquinconazole (385), flutolanil (396), fosetyl-aluminium (407), fuberidazole (409), guazatine (422), hexaconazole (435), hymexazol (447), imazalil (449), iprodione (470), mancozeb (496), maneb (497), metalaxyl (516), metalaxyl-M (517), metconazole (525), myclobutanil (564), nuarimol (587), silthiofam (729), oxadixyl (601), oxine-copper (605), oxolinic acid (606), pencycuron (620), prochloraz (659), procymidone (660), pyrimethanil (705), propiconazole (675), pyraclostrobin (690), pyroquilon (710), quintozene (716), tebuconazole (761), tetraconazole (778), thiabendazole (790), thiophanate-methyl (802), thiram (804), triadimenol (815), triazoxide (821), triticonazole (842), trifloxystrobin (832), picoxystrobin (647), ipconazole (468), and ortho-cyclopropyl-carboxanilide derivatives that include, but are not limited to, compounds, stereoisomers, and mixtures of stereoisomers of the formulae: 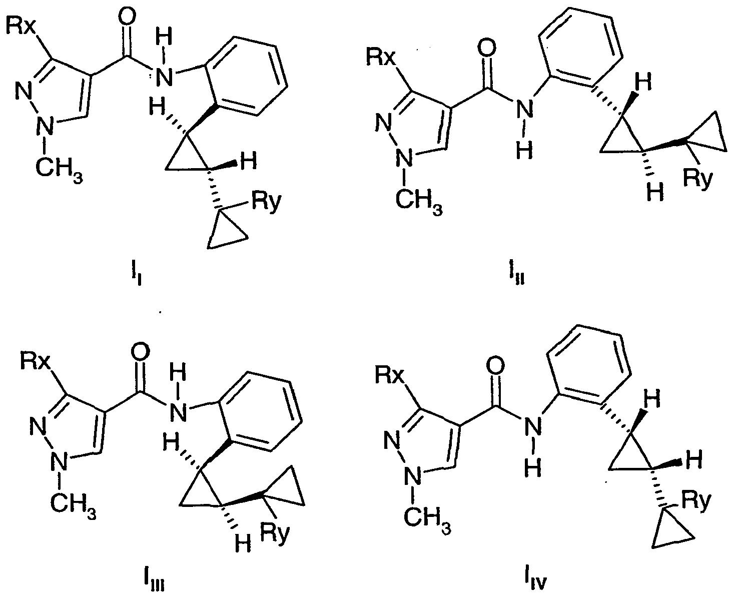 wherein
Rₓ is trifluoromethyl or difluoromethyl and
R_{y} is hydrogen or methyl; or a tautomer of such a compound.

Particularly preferred are compounds wherein the content of racemic compounds represents a racemic mixture of compounds of formula Iₗ, wherein Rₓ is difluoromethyl and R_{y} is hydrogen, and compounds of formula Iₗₗ, wherein Rₓ is difluoromethyl and R_{y} is hydrogen, is from 65 to 99 % by weight.

In an embodiment one or more of emamectin benzoate (291), metalaxyl-M (517), fipronil (354), thiamethoxam (792), difenoconazole (247), azoxystrobin (47), fludioxonil, silthiofam (729), tefluthrin (769), imidacloprid (458), thiacloprid (791), clothianidin (165), thiabendazole (790) and myclobutanil (564) is preferred.

Especially preferred mixing partners are metalaxyl (516), metalaxyl-M (517), thiamethoxam (792), difenoconazole (247), fludioxonil, azoxystrobin (47), silthiofam (729), tefluthrin (769), imidacloprid (458), clothianidin (165), myclobutanil and thiabendazole (790).

In an embodiment of the present invention, the action of the seed treatment nematicide can be significantly improved and adapted to the given circumstances by the use of other nematicide compounds used in agriculture, for example, by application of the other nematicides to the locus of the sowing or planting of the plant propagation material before its planting or during its growth.

Examples of such nematicide applications fall into four distinct groups: 1) in-furrow applied nematicide at planting (for example, aldicarb in the form Temik 15G in cotton can be applied at rates of 5 to 7 lbs of product per acre applied in furrow at the time of planting; 2) sidedress applied nematicide after plant emergence (for example, regions that have high nematode infestations Temik 15G can also be applied during the 2nd to 8th true leaf stage to cotton development); 3) foliar applied nematicide (for example, oxamyl in the form of Vydate (oxamyl) can be applied as a foliar spray after plant emergence to protect the plant from nematodes; and 4) soil fumigation (for example, methyl bromide and Telone (1,3-dichloropropene) can be used to fumigate heavily nematode infested soils.

The following Examples are given by way of illustration and not by way of limitation of the invention.

### Examples

### Example 1

Cotton seeds are grown to compare the different nematicide treatments of
(1) soil treatment - fungicide and insecticide on a seed: seed treatment (a), but then alicarb is applied in furrow (at planting) at a rate of 360 grams ai per acre (similar to 5lbs of product of Temik 15G), and
(2) seed treatment - the combination of fungicide & insecticide with abamectin on a seed: seed treatment (b).

Seed Treatment (a): a seed treatment formulation is prepared by diluting a fungicide concentrate which contains 3.32% mefenoxam (CAS# 70630-17-0), 1.11 % fludioxonil (CAS# 131341-86-1) and 6.64% azoxystrobin (CAS# 131860-33-8), and an insecticide concentrate containing 47.6 % thiamethoxam into water as a carrier. This formulation dilution is applied for one to two minutes at ambient temperature to approximately one kilogram of known root-knot nematode tolerant cotton seed with in a Hege seed treater (Hege) at a rate of 0.37 mg active ingredient (combination of fungicide and insecticide seed treatments) per each individual seed. Seed treated are allowed to air dry and are shipped and stored at ambient temperature prior to planting (approximately two weeks).

Seed Treatment (b): The above formulations of insecticide and fungicides (in seed treatment (a)) are combined with an abamectin concentrate containing 46.3% abamectin, into water as a carrier. Thiamethoxam, mefenoxam, fludioxonil, azoxystrobin and abamectin is applied at a total rate of 0.52 mg active per seed. The fungicides and insecticide are applied at the rate given in (a) and the abamectin is applied at a rate of 0.15 mg active per seed. This formulation dilution is applied for one to two minutes at ambient temperature to approximately one kilogram of the cotton seed used in (a) in a Hege seed treater. Seed treated are allowed to air dry and are shipped and stored at ambient temperature prior to planting (approximately two weeks).

The cotton seed with root-knot nematode tolerance is used to compare treatments (1) and (2). Cotton seeds are treated with formulations as described in seed treatments (a) and (b), and thereafter, the seed is sown (4 seeds per foot) in plots with dimensions of 4 rows (36 inch row spacing) by 50-feet in a randomized complete block layout. The field soil within the experimental areas are contaminated/infested with root-knot nematodes prior to planting. The results are provided in Table 1.

**Table 1.**

| Treatments | Seed Cotton Yields (lbs/acre) | Average Gall Rating* |
|---|---|---|
| 1. Soil Treated Nematicide (insecticide & fungicide treated seed with aldicarb in-furrow application) | 2441 | 2.9 |
| 2. Seed Treated Nematicide (insecticide, fungicide, abamectin treated seed) | 2956 | 2.4 |

| | | |
|---|---|---|
| * Gall ratings utilized a 1 to 6 scale, whereas 1 is no galls, 2 is one to two galls per plant, 3 is three to ten galls per plant, 4 is eleven to thirty galls per plant, 5 is thirty-one to one hundred galls per plant and 6 is greater than 100 galls per plant. | | |

The data indicate that the yield of a crop from a nematode tolerant seed treated with a nematicide before it is sown (treatment (2)) is better (17.4% increase in yield) than a corresponding seed that has the nematicide treatment at planting (i.e. after sowing) (treatment (1). Also fewer galls were observed (17.2% reduction) on the nematode resistant variety with the seed treatment nematicide (Treatment 2) than the treatment with no seed treatment nematicide (Treatment 1).

### Example 2

Soybean seeds were grown to compare nematicide seed treatments between seeds resistant to certain races of soybean cyst nematode (SCN) and seeds that were not resistant to SCN.

Both sets of seeds are treated by seed treatment (c) and (d) described below:
Seed Treatment (c): a seed treatment formulation is prepared by diluting a fungicide concentrate which contains 1.07% mefenoxam (CAS# 70630-17-0) and 0.73% fludioxonil (CAS# 131341-86-1) into water as a carrier. This formulation dilution is applied for one to two minutes at ambient temperature to approximately one kilogram of seed in a Hege seed treater (Hege) at a rate 6.5 g ai per 100 kg seed (combination of fungicide). Seed treated are allowed to air dry and are shipped and stored at ambient temperature prior to planting (approximately two weeks).
Seed Treatment (d): The above formulation fungicides (in seed treatment (c)) are combined with an abamectin concentrate containing 46.3% abamectin, into water as a carrier. Mefenoxam and fludioxonil and abamectin are applied at a total rate of 6.5 g ai per 100 kg seed for the fungicides and 0.10 mg ai per seed for abamectin. This formulation dilution is applied for one to two minutes at ambient temperature to approximately one kilogram of seed in a Hege seed treater. Seed treated are allowed to air dry and are shipped and stored at ambient temperature prior to planting (approximately two weeks).

The seeds are sown (4 seeds per foot) in plots with dimensions of 4 rows (36 inch row spacing) by 50-feet in a randomized complete block layout. The field soil within the experimental areas are contaminated/infested with soybean cyst nematodes prior to planting. The results are provided in Table 2.

**Table 2.**

| Seed types | Treatments | Yields (lbs/acre) | Number of cyst per root* |
|---|---|---|---|
| Nematode Susceptile seed | treatment (c) | 2640 | 615 |
| | treatment (d) | 2520 | 411 |
| SCN Resistant seed | treatment (c) | 2685 | 0 |
| | treatment (d) | 2760 | 0 |

| | | | |
|---|---|---|---|
| * Number of soybean cyst in the root zone. | | | |

Data in table 2 shows that a resistant seed treated with a seed treatment nematicide (treatment (d)) provides the largest yield. This increase in yield occured even when symptoms caused by the reproduction of the SCN is zero. The data indicates that the seed treatment nematicide reduces the initial introduction of the nematode that would rob the plant of needed energy needed for yield. In treatment c (fungicide only), the Soybean seed with built in SCN resistance limited successful reproduction of cyst formation, but likely did not limit the initial infection process. The introduction of nematicide as a seed treatment killed the SCN outside the root zone prior to infection. Further and surprisingly, the nematicide seed treatment (treatment (d)) on a nematode resistant seed provides an improved yield compared to without the nematicide (i.e. only fungicide seed treatment (c)), whilst the nematicide seed treatment (treatment (d)) on a susceptile seed provides a lower yield than fungicide only seed treatment (c)).

## Claims

1. A method of improving the growing characteristics of a nematode tolerant or resistant plant, which method comprises treating a plant propagation material of the plant with a pesticide having nematicide properties.

2. The method according to claim 1 wherein the material is also treated with one or more further pesticides.

3. The method according to claim 2 wherein the pesticide is selected from a fungicide and an insecticide.

4. The method according to either claim 2 or 3 wherein the pesticide is one or more of a triazole derivative, strobilurin, carbamate, benzimidazole, N-trihalomethylthio compounds, substituted benzenes, carboxamides, phenylamides and phenylpyrroles, and mixtures thereof; neonicotinoids, carbamates, pyrethroids and organophosphorus compounds.

5. The method according to any one of claims 2 to 4 wherein the pesticide is one or more of emamectin benzoate, metalaxyl-M, fipronil, thiamethoxam, difenoconazole, azoxystrobin, fludioxonil, silthiofam, tefluthrin, imidacloprid, thiacloprid, clothianidin, thiabendazole and myclobutanil.

6. The method according to any one of claims 1 to 5 wherein the pesticide having nematicide properties is selected from abamectin, aldicarb, carbofuran, carbosulfan, oxamyl, aldoxycarb, ethoprop benomyl, alanycarb, henamiphos, fenamiphos, fensulfothion, terbufos, fosthiazate, dimethoate, phosphocarb, dichlofenthion, isamidofos, fosthietan, isazofos ethoprophos, cadusafos, terbufos, chlorpyrifos, dichlofenthion, heterophos, isamidofos, mecarphon, phorate, thionazin, triazophos, diamidafos, fosthietan and phosphamidon.

7. The method according to any one of claims 1 to 6 wherein the plant is selected from cotton, corn, cereals, vegetables, clovers, legumes, sugar cane, sugar beets, tobacco, rapeseed, sunflower, safflower, and sorghum.

8. The method according to any one of claims 1 to 7 wherein the propagation material is a seed.

9. A nematode tolerant or resistant plant propagation material treated by a pesticide having nematicide properties.

## Patentansprüche

1. Eine Methode zur Verbesserung von Wachstumsmerkmalen einer Nematode-toleranten oder Nematode-beständigen Pflanze, welche Methode die Behandlung des Pflanzenanzuchtmaterials der Pflanze mit einem mit nematiziden Merkmalen ausgestatteten Pflanzenschutzmittel umfasst.

2. Die Methode gemäß Anspruch 1, worin das Material auch mit einem oder mehreren zusätzlichen Pflanzenschutzmitteln behandelt wird.

3. Die Methode gemäß Anspruch 2, worin das Pflanzenschutzmittel aus einem Fungizid und einem Insektizid ausgewählt wird.

4. Die Methode gemäß entweder Anspruch 2 oder 3, worin das Pflanzenschutzmittel eines oder mehrere von einem Triazolderivat, Strobilurin, Carbamat, Benzimidazol, N-Trihalomethylthio-Verbindungen, substituierte Benzene, Carboxamide, Phenylamide und Phenylpyrrole und Mischungen davon; Neonicotinoide, Carbamate, Pyrethroide und phosphororganische Verbindungen, ist.

5. Die Methode gemäß etwaigem Anspruch 2 bis 4, worin das Pflanzenschutzmittel eines oder mehrere vom Emamectinbenzoat, Metalaxyl-M, Fipronil, Thiamethoxam, Difenoconazol, Azoxystrobin, Fludioxonil, Silthiofam, Tefluthrin, Imidacloprid, Thiacloprid, Clothianidin, Thiabendazol und Myclobutanil, ist.

6. Die Methode gemäß etwaigem Anspruch 1 bis 5, worin das mit nematiziden Merkmalen ausgestattete Pflanzenschutzmittel aus Abamectin, Aldicarb, Carbofuran, Carbosulfan, Oxamyl, Aldoxycarb, Ethopropbenomyl, Alanycarb, Henamiphos, Fenamiphos, Fensulfothion, Terbufos, Fosthiazat, Dimethoat, Phosphocarb, Dichlofenthion, Isamidofos, Fosthietan, Isazofosethoprophos, Cadusafos, Terbufos, Chlorpyrifos, Dichlofenthion, Heterophos, Isamidofos, Mecarphon, Phorat, Thionazin, Triazophos, Diamidafos, Fosthietan und Phosphamidon, gewählt wird.

7. Die Methode gemäß etwaigem Anspruch 1 bis 6, worin die Pflanze aus Baumwolle, Weizen, Getreide, Gemüse, Kleearten, Hülsenfrüchten, Zuckerrohr, Zuckerrüben, Tabak, Rapssaaten, Sonnenblume, Florsafran und Sorghum, gewählt wird.

8. Die Methode gemäß etwaigem Anspruch 1 bis 7, worin das Anzuchtmaterial ein Saat ist.

9. Ein Nematode-tolerantes oder Nematode-beständiges Pflanzenanzuchtmaterial behandelt mit einem mit nematiziden Merkmalen ausgestatteten Pflanzenschutzmittel.

## Revendications

1. Procédé d'amélioration des caractéristiques de croissance d'une plante tolérante ou résistante aux nématodes, ledit procédé comprenant le traitement d'un matériau de propagation de la plante avec un pesticide à propriétés nématicides.

2. Procédé selon la revendication 1, dans lequel le matériau est également traité avec un ou plusieurs autres pesticides.

3. Procédé selon la revendication 2, dans lequel le pesticide est sélectionné parmi un fongicide et un insecticide.

4. Procédé selon la revendication 2 ou 3, dans lequel le pesticide est un ou plusieurs composés comprenant les dérivés du triazole, la strobilurine, le carbamate, le benzimidazole, les composés N-trihalométhylthio, les benzènes substitués, les carboxamides, les phénylamides et les phénylpyrroles, ou des mélanges de ces composés ; des néonicotinoïdes, des carbamates, des pyréthrinoïdes et des composés organophosphorés.

5. Procédé selon l'une quelconque des revendications 2 à 4, dans lequel le pesticide est un ou plusieurs composés comprenant le benzoate d'émamectine, le métalaxyl-M, le fipronil, le thiaméthoxame, le difénoconazole, l'azoxystrobine, le fludioxonil, le silthiofam, la téfluthrine, l'imidaclopride, le thiaclopride, la clothianidine, le thiabendazole et le myclobutanil.

6. Procédé selon l'une quelconque des revendications 1 à 5, dans lequel le pesticide ayant des propriétés nématicides est sélectionné parmi l'abamectine, l'aldicarbe, le carbofuran, le carbosulfan, l'oxamyl, l'aldoxycarbe, l'éthoprop, le bénomyl, l'alanycarbe, l'hénamiphos, le fénamiphos, le fensulfothion, le terbufos, le fosthiazate, le diméthoate, le phosphocarbe, le dichlofenthion, l'isamidofos, le fosthiétan, l'isazofos, l'éthoprophos, le cadusafos, le terbufos, le chlorpyrifos, le dichlofenthion, l'hétérophos, l'isamidofos, le mécarphon, le phorate, le thionazin, le triazophos, le diamidafos, le fosthiétan et le phosphamidon.

7. Procédé selon l'une quelconque des revendications 1 à 6, dans lequel la plante est sélectionnée parmi le coton, le maïs, les céréales, les légumes, les trèfles, les légumineuses, la canne à sucre, les betteraves sucrières, le tabac, le colza, le tournesol, le carthame et le sorgho.

8. Procédé selon l'une quelconque des revendications 1 à 7, dans lequel le matériau de propagation est une semence.

9. Matériau de propagation végétale tolérant ou résistant aux nématodes, traité par un pesticide ayant des propriétés nématicides.
